# EUROPÄISCHE PATENTANMELDUNG

(11) **EP 4 793 680 A1**
(43) Veröffentlichungstag der Anmeldung: **19.08.2026**
(21) Anmeldenummer: 26187172.7
(22) Anmeldetag: 02.05.2023
(51) Int. Cl.: G02B 5/28, G01J 3/26

(54) **VERFAHREN ZUR BEHANDLUNG EINES OPTISCHEN ABSTANDSHALTERS**

(30) Priorität: 03.05.2022 DE 102022110797
(62) Dokumentnummer(n) der früheren Anmeldung(en) nach Art. 76 EPÜ: 23726277.9 / 4 519 725
(71) Anmelder: Technische Hochschule Wildau, 15745 Wildau (DE)
(72) Erfinder: Villringer, Claus, 10829 Berlin (DE); Laufer, Jan, 06120 Halle (DE)
(74) Vertreter: Heinemeyer, Karsten

(57) **Zusammenfassung**

Die Erfindung betrifft ein Fabry-Perot-Resonator mit einem optischen Abstandshalter (203) und ein Verfahren zur ortsunabhängigen Einstellung von Resonanzeigenschaften eines Fabry-Perot-Resonators.

## Beschreibung

Die Erfindung betrifft ein Verfahren zur Behandlung eines optischen Abstandshalters für einen Fabry-Perot Resonator. Weiterhin betrifft die Erfindung einen durch das Verfahren behandelten homogenisierten optischen Abstandshalter. Schließlich betrifft die Erfindung auch eine Verwendung des homogenisierten optischen Abstandshalters in einem Fabry-Perot Resonator und/oder in einer spektralen Kamera, insbesondere in einer Hyperspektralkamera. Letztendlich betrifft die Erfindung auch ein Computerprogramm zur Durchführung von Verfahrensschritten des Verfahrens.

Es ist bekannt, optische Abstandshalter in Fabry-Perot Resonatoren einzusetzen, um einen Strahl mit einer Resonanzwellenlänge des Fabry-Perot Resonators zu erhalten. Hierfür weist der Fabry-Perot Resonator typischerweise zwei dichroitische Spiegel auf, zwischen denen der optische Abstandshalter liegt. Fabry-Perot Resonatoren haben dabei im Transmissionsspektrum strukturbedingte regelmäßige Resonanzwellenlängen, zwischen denen jeweils der sogenannte freie Spektralbereich liegt, dessen spektrale Anteile durch den Fabry-Perot Resonator herausgefiltert werden. Um hierbei nur mit einer Resonanzwellenlänge des Fabry-Perot Resonators weiterzuarbeiten, ist bekannt, einen Bandpassfilter, insbesondere einen verstellbaren Bandpassfilter, einzusetzen, durch den lediglich Licht im Bereich einer der Resonanzwellenlängen des Fabry-Perot Resonators hindurchtritt.

Weiterhin ist bekannt, dass durch eine Temperaturänderung des optischen Abstandshalters und eine dadurch ausgelöste Veränderung der optischen Dicke des Abstandshalters die Resonanzwellenlänge des Fabry-Perot Resonators verändert werden kann. Da hierbei jedoch die Position der Resonanzwellenlänge im Transmissionsspektrum und deren Bandbreite stark von der ortsabhängigen optischen Dicke des Abstandshalters abhängen, ist eine besonders homogene optische Dicke des optischen Abstandshalters für praktische Anwendungen eines derart einstellbaren Fabry-Perot Resonators notwendig, insbesondere um eine geringe Bandbreite zu ermöglichen.

Ausgehend von dieser Erkenntnis wurde beispielsweise in "Development of tuneable Fabry-Perot sensors for parallelised photoacoustic signal acquisition" (Villinger et al.; Proc. Of SPIE Vol. 10878; doi: 10.1117/12.2509437) ein Verfahren vorgestellt, bei dem ein Photopolymer als optischer Abstandshalter verwendet wird. Photopolymere, wie beispielsweise in diesem Fall das Photopolymer Poly(vinyl cinnamat) (PVCi), können die Eigenschaft haben, dass sie bei Bestrahlung mit kurzwelligem Licht, also insbesondere mit Licht im UV-Bereich, ihren Brechungsindex dauerhaft verändern und mithin ihre optische Dicke durch Bestrahlung mit solchem Licht veränderlich ist. In dem genannten Dokument wird beschrieben, dass räumlich aufgelöst die optische Dicke eines entsprechenden optischen Abstandshalters vermessen wird um anschließend mit kurzwelligem Licht die Dicke zu verändern und dadurch zu homogenisieren.

Aufgabe der vorliegenden Erfindung ist es, ein verbessertes Bearbeiten, insbesondere ein schnelles Bearbeiten, vorzugsweise ein schnelles Homogenisieren, des optischen Abstandshalters zu ermöglichen.

Gelöst wird diese Aufgabe mit einer Heizelektrode mit den in Anspruch 1 angegebenen technischen Merkmalen, mit einem Fabry-Perot-Resonator nach Anspruch 2, mit einer spektralen Kamera nach Anspruch 5, einem Verfahren gemäß Anspruch 6 und einem Computerprogramm nach Anspruch 8.

Gemäß der Erfindung wird zur Lösung der oben genannten Aufgabe eine Heizelektrode zur Veränderung der Resonanzeigenschaften eines Fabry-Perot Resonators vorgeschlagen. Dabei ermöglicht die Heizelektrode über eine ortsabhängige Schichtdicke der Heizelektrode und/oder über eine Mehrzahl von Elektrodenstreifen der Heizelektrode mit zumindest teilweise verschiedenen anliegenden Stromstärken ein im Wesentlichen räumlich homogenes Aufheizen eines daran direkt oder indirekt angeordneten optischen Abstandshalters.

Gemäß einem ersten Aspekt der Erfindung wird zur Lösung dieser Aufgabe ein Verfahren zur Behandlung eines optischen Abstandshalters für einen Fabry-Perot Resonator vorgeschlagen. Das Verfahren aufweisend die Schritte:
- Anordnen des optischen Abstandshalters, welcher zumindest teilweise aus einem Photopolymer besteht, in einem Fabry-Perot Resonator, so dass der Fabry-Perot Resonator zwei durch den optischen Abstandshalter voneinander getrennte dichroitische Spiegel umfasst;
- Anordnen des Fabry-Perot Resonators in einem optischen System;
- Ausrichten eines räumlich modulierten Behandlungsstrahls auf den Fabry-Perot Resonator, wobei der räumlich modulierte Behandlungsstrahl Licht aus einem kurzwelligen Bereich aufweist, wobei das Licht aus dem kurzwelligen Bereich geeignet ist, eine Brechungsindexänderung des optischen Abstandshalters zu verursachen;
- Ausrichten eines Prüfstrahls, insbesondere eines optisch aufgeweiteten Prüfstrahls, auf den Fabry-Perot Resonator;
- räumlich aufgelöstes Detektieren eines reflektierten oder transmittierten Anteils des auf den Fabry-Perot Resonator ausgerichteten Prüfstrahls, wobei der reflektierte oder transmittierte Anteil ortsabhängige Resonanzwellenlängen des Fabry-Perot Resonators indiziert; und
- räumlich aufgelöstes Anpassen einer ortsabhängigen Bestrahlungsstärke des räumlich modulierten Behandlungsstrahls basierend auf dem detektierten reflektierten oder transmittierten Anteil derart, dass durch die verursachte Brechungsindexänderung eine Varianz von indizierten ortsabhängigen Resonanzwellenlängen des Fabry-Perot Resonators reduziert wird.

Ein derart hergestellter Abstandhalter lässt sich auf vorteilhafte Weise in einer Kamera, insbesondere in einer Hyperspektralkamera und/oder in einem Sensor, insbesondere in einem Fabry-Perot Resonator, der zumindest ein Teil eines Sensors ist, zur Durchführung von Messungen bzw. Erzeugung geeigneter Messwerte einsetzen

Im Rahmen der Erfindung wurde erkannt, dass während der räumlichen Änderung des Brechungsindizes des Abstandshalters durch den Behandlungsstrahl das resultierende Ergebnis zeitnah geprüft werden sollte, um eine Homogenisierung der optischen Dicke des optischen Abstandshalters möglichst schnell erreichen zu können. Hierfür wird erfindungsgemäß der Einsatz von zwei Strahlen, nämlich von dem Behandlungsstrahl und dem Prüfstrahl, vorgeschlagen. Dabei kann die Bestrahlungsstärke des Behandlungsstrahls immer an den aktuell detektierten reflektierten oder transmittierten Anteil des Prüfstrahls angepasst werden.

Im Rahmen des erfindungsgemäßen Verfahrens wird ein zeitaufwendiges Verfahren mit einer wechselnden Folge von Prüfschritten und Bearbeitungsschritten vorteilhaft verkürzt durch das gleichzeitige Ausführen von Prüfschritten und Bearbeitungsschritten.

Dabei erlaubt das erfindungsgemäße Verfahren eine automatisierte Ausführung der beiden letztgenannten Verfahrensschritte, also des räumlich aufgelösten Detektierens des reflektierten oder transmittierten Anteils und des räumlich aufgelösten Anpassens der ortsabhängigen Bestrahlungsstärke. Durch eine derart automatisierte Ausführung von Teilen des Verfahrens kann die Behandlung des optischen Abstandshalters, abhängig von der verwendeten Automatisierungstechnik, besonders schnell erfolgen.

Das erfindungsgemäße Verfahren erlaubt eine kostengünstige Behandlung des optischen Abstandshalters, da sämtliche hierfür notwendigen Bestandteile der Anordnung zur Ausführung des Verfahrens bereits grundsätzlich kommerziell erworben werden können und mithin nicht speziell hergestellt werden müssen. Lediglich eine Programmierung für eventuell zu automatisierende Verfahrensschritte müsste erfindungsgemäß bereitgestellt werden.

Durch das räumlich aufgelöste Anpassen der ortsabhängigen Bestrahlungsstärke kann bereits durch den einen räumlich modulierten Behandlungsstrahl der gesamte optische Abstandshalter behandelt werden. Insbesondere ist kein zeitaufwendiges Verändern der Ausrichtung des Behandlungsstrahls notwendig. Insofern beschreibt das räumlich aufgelöste Anpassen der ortsabhängigen Bestrahlungsstärke insbesondere ein räumlich aufgelöstes Anpassen der ortsabhängigen Bestrahlungsstärke bei im Wesentlichen konstanter Ausrichtung des Behandlungsstrahls.

Vorzugsweise werden die Verfahrensschritte zur Anordnung der Komponenten und zur Ausrichtung der Strahlen lediglich zu Beginn des Verfahrens einmal ausgeführt. Die beiden Schritte des räumlich aufgelösten Detektierens eines reflektierten oder transmittierten Anteils und eines räumlich aufgelösten Anpassens einer ortsabhängigen Bestrahlungsstärke werden vorzugsweise wiederholt ausgeführt. Durch das wiederholte Ausführen kann mit jeder verursachten Brechungsindexänderung die Varianz der indizierten ortabhängigen Resonanzwellenlängen des Fabry-Perot Resonators weiter reduziert werden. Hierdurch kann die optische Dicke entlang der Fläche des optischen Abstandshalters weiter homogenisiert werden.

Unter einer Behandlung des optischen Abstandshalters ist im Sinne der Erfindung eine Bearbeitung der optischen Dicke des optischen Abstandshalters zu verstehen. Diese Bearbeitung der optischen Dicke führt erfindungsgemäß zu einer Reduzierung der Varianz von ortsabhängigen Resonanzwellenlängen des Fabry-Perot Resonators. In diesem Sinne findet erfindungsgemäß eine Homogenisierung des optischen Abstandshalters statt, nämlich eine Behandlung um eine über die relevante Ausdehnung des optischen Abstandshalters homogene optische Dicke bereitzustellen. Daher wird im Folgenden ein derart behandelter optischer Abstandshalter auch homogenisierter optischer Abstandshalter genannt.

Um die Varianz der indizierten ortabhängigen Resonanzwellenlängen zu verringern ist es erfindungsgemäß nicht notwendig diese Varianz zu bestimmen. Alternativ oder ergänzend zur Varianz werden in erfindungsgemäßen Ausführungsformen auch andere Maße bestimmt, die mit der Varianz korrelieren.

Die ortsabhängige Resonanzwellenlänge muss für das erfindungsgemäße Verfahren nicht explizit bestimmt werden. In einigen erfindungsgemäßen Ausführungsformen werden andere ortsabhängige Eigenschaften des Fabry-Perot Resonators aus dem detektierten reflektierten oder transmittierten Anteil bestimmt, welche die ortsabhängige Resonanzwellenlänge direkt indizieren und/oder mit dieser stark korreliert sind.

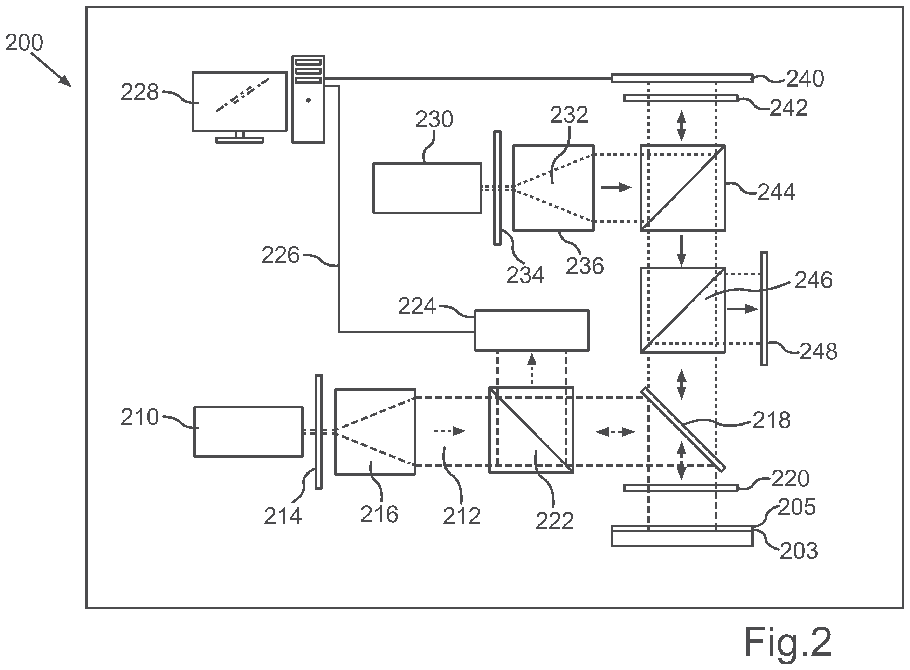

Das erfindungsgemäße Verfahren kann sowohl mit dem reflektierten Anteil als auch mit dem transmittierten Anteil des auf den Fabry-Perot Resonator ausgerichteten Prüfstrahls ausgeführt werden, da aus beiden Anteilen zumindest theoretisch die aktuelle Resonanzwellenlänge bestimmt werden kann. Einfacher in der praktischen Ausführung ist jedoch das Bestimmen der aktuellen räumlich aufgelösten Resonzwellenlänge oder einer dazu korrespondierenden Eigenschaft des Fabry-Perot Resonators aus dem reflektierten Anteil des auf den Fabry-Perot Resonator ausgerichteten Prüfstrahls. Ein Beispiel hierfür ist im Rahmen von Fig. 2 erläutert. Daher ist die Verwendung des reflektierten Anteils eine bevorzugte Variante des erfindungsgemäßen Verfahrens.

Nachfolgend werden bevorzugte Ausführungsformen des erfindungsgemäßen Verfahrens beschrieben.

In einer besonders bevorzugten Ausführungsform des Verfahrens wird für das Anpassen der ortsabhängigen Bestrahlungsstärke eine kleinste indizierte Resonanzwellenlänge des Fabry-Perot Resonators bestimmt und die ortsabhängige Bestrahlungsstärke wird derart gewählt, dass eine durch den räumlich modulierten Behandlungsstrahl verursachte Brechungsindexänderung eine Reduzierung der jeweiligen ortsabhängigen Resonanzwellenlänge im Wesentlichen hin zu der kleinsten indizierten Resonanzwellenlänge verursacht. Die in dieser Ausführungsform vorgeschlagene Brechungsindexänderung anhand einer Orientierung an der kleinsten indizierten Resonanzwellenlänge ermöglicht eine besonders einfache Steuerung der Anpassung der ortsabhängigen Bestrahlungsstärke des räumlich modulierten Behandlungsstrahls. So muss lediglich die kleinste indizierte Resonanzwellenlänge als Grundlage für die im nächsten Schritt zu verwendende ortsabhängige Bestrahlungsstärke genutzt werden. Das Verfahren gemäß dieser Ausführungsform ist auch vor dem Hintergrund vorteilhaft, dass durch die Bestrahlung des Photopolymers meist eine Reduzierung der Resonanzwellenlänge an dem bestrahlten Ort verursacht wird.

Vorzugsweise weist der im erfindungsgemäßen Verfahren eingesetzte Behandlungsstrahl Licht mit einer Wellenlänge von weniger als 450 nm, insbesondere von weniger als 420 nm auf. Besonders bevorzugt handelt es sich bei dem Behandlungsstrahl um Licht aus dem ultravioletten Spektralbereich. Derart kurzwelliges Licht ist besonders geeignet, die erfindungsgemäße Brechungsindexänderung auszuführen.

Bei dem für den optischen Abstandshalter verwendeten Photopolymer handelt es sich beispielsweise um ein Photopolymer welches in seiner chemischen Zusammensetzung Cinnamoyl-Gruppen aufweist, insbesondere handelt es sich beispielsweise um das Photopolymer Poly(vinyl cinnamat) (PVCi). Auch andere Photopolymere mit den erfindungsrelevanten Eigenschaften sind dem Fachmann bekannt und können entsprechend für das erfindungsgemäße Verfahren eingesetzt werden.

In einer weiteren Ausführungsform weist das erfindungsgemäße Verfahren weiterhin ein Anpassen einer Bestrahlungsdauer des räumlich modulierten Behandlungsstrahls basierend auf dem detektierten reflektierten oder transmittierten Anteil auf. In dieser Ausführungsform wird ergänzend zur Bestrahlungsstärke auch die Bestrahlungsdauer des räumlich modulierten Behandlungsstrahls angepasst. Hierdurch kann eine Anpassung der Bestrahlungsstärke teilweise vermieden werden, da beispielsweise durch eine längere Bestrahlung ebenfalls die gewünschte Brechungsindexänderung erreicht werden kann.

In einer besonders bevorzugten Ausführungsform des erfindungsgemäßen Verfahrens wird der Fabry-Perot Resonator gleichzeitig von dem Prüfstrahl und dem Behandlungsstrahl bestrahlt. Durch das gleichzeitige Bestrahlen kann eine besonders zeiteffiziente Ausführung des Verfahrens ermöglicht werden. So kann beispielsweise noch während des Detektierens des reflektierten oder transmittierten Anteils die räumlich aufgelöste Anpassung der Bestrahlungsstärke erfolgen. Das gleichzeitige Bestrahlen kann dabei über verschiedene optische Anordnungen ermöglicht werden. In einer bevorzugten Variante der vorhergehenden Ausführungsform wird die gleichzeitige Bestrahlung durch den Behandlungsstrahl und den Prüfstrahl über ein Einbringen eines dichroitischen Spiegels in das optische System ermöglicht. Durch den dichroitischen Spiegel können Strahlen aus unterschiedlichen Strahlungsquellen besonders einfach zu einem kombinierten Strahl überlagert und dadurch gleichzeitig auf den Fabry-Perot Resonator gestrahlt werden. Details zu möglichen optischen Anordnungen werden im Rahmen der Figurenbeschreibung gezeigt und erläutert.

In einer besonders vorteilhaften Ausführungsform erfolgen das räumlich aufgelöste Detektieren des reflektierten oder transmittierten Anteils und das räumlich aufgelöste Anpassen der ortsabhängigen Bestrahlungsstärke automatisiert. In dieser Ausführungsform kann das Verfahren besonders schnell ausgeführt werden, da keine manuellen Zwischenschritte, beispielsweise zum Einstellen der Bestrahlungsstärke, notwendig sind. In einer vorteilhaften Variante dieser Ausführungsform wird der Fabry-Perot Resonator gleichzeitig von dem Prüfstrahl und dem Behandlungsstrahl bestrahlt. In dieser Variante werden mehrere vorteilhafte Varianten von Verfahrensschritten kombiniert, die jeweils zu einer vorteilhaften Beschleunigung des erfindungsgemäßen Verfahrens beitragen können. So kann sowohl die teilweise Automatisierung von Verfahrensschritten als auch das ermöglichte gleichzeitige Ausführen von Verfahrensschritten eine Dauer des erfindungsgemäßen Verfahrens verkürzen.

In einer besonders vorteilhaften Ausführungsform des erfindungsgemäßen Verfahrens werden das räumlich aufgelöste Detektieren des reflektierten oder transmittierten Anteils und das darauf basierende räumlich aufgelöste Anpassen der ortsabhängigen Bestrahlungsstärke so oft wiederholt, bis ein vorbestimmter Schwellenwert für die Varianz von indizierten ortabhängigen Resonanzwellenlängen des Fabry-Perot Resonators zumindest in einem relevanten Behandlungsbereich des optischen Abstandshalters erreicht wird. Die vorgeschlagene Wiederholung der Verfahrensschritte bis zum Erreichen des Schwellenwerts ermöglicht vorteilhaft eine Automatisierung dieser Verfahrensschritte. Dabei ist der relevante Behandlungsbereich des optischen Abstandshalters ein räumlicher Bereich des optischen Abstandshalters in der Nähe der in späteren Anwendungen geplanten optischen Achse. Dieser räumliche Bereich kann dabei abhängig sein von der späteren Anwendung, da es Anwendungen geben kann, in denen Strahlen gefiltert werden sollen, die deutlich beabstandet von der optischen Achse auf den optischen Abstandshalter treffen. Der vorbestimmte Schwellenwert gemäß der vorgeschlagenen Variante kann ein Schwellenwert der Varianz sein. Alternativ oder ergänzend kann der vorbestimmte Schwellenwert eine andere Größe sein, insbesondere eine andere statistische Größe für die Auswertung einer Verteilung von Messwerten. Dabei korreliert der vorbestimmte Schwellenwert vorzugsweise mit der Varianz von indizierten ortabhängigen Resonanzwellenlängen und bildet in diesem Sinne implizit einen vorbestimmten Schwellenwert für diese Varianz.

Gemäß einem zweiten Aspekt der Erfindung wird zur Lösung der oben genannten Aufgabe ein homogenisierter optischer Abstandshalter vorgeschlagen. Der erfindungsgemäße homogenisierte optische Abstandshalter wurde dabei gemäß einer Ausführungsform des Verfahrens gemäß dem ersten Aspekt der Erfindung behandelt.

Ein derart hergestellter homogenisierter optischer Abstandshalter kann vergleichsweise große Ausmaße haben, da die Behandlung zur Homogenisierung besonders schnell gemäß dem ersten Aspekt der Erfindung erfolgen kann. Erst durch diese schnelle Homogenisierung können optische Abstandshalter mit großen Ausmaßen in der Praxis nutzbar gemacht werden.

So hat der homogenisierte optische Abstandshalter vorzugsweise eine Querschnittsfläche senkrecht zur vorgesehenen optischen Achse von mindestens 100 mm², insbesondere von mindestens 200 mm². Eine derartig große Querschnittfläche erlaubt viele kommerzielle Einsatzgebiete für einen solchen optischen Abstandshalter. Beispielsweise kann dieser homogenisierte optische Abstandshalter bei dieser Größe vorteilhaft in einer spektralen Kamera, und/oder für eine kamerabasierte photoakustische Bildgebung verwendet werden. Besonders geeignete Verwendungen betreffen ferner den Einsatz des homogenisierten optischen Abstandshalters in einer Hyperspektralkamera und/oder in einem Sensor.

In einer weiteren bevorzugten Ausführungsform hat der optische Abstandshalter gemäß dem zweiten Aspekt der Erfindung eine Dicke zwischen 1 µm und 50 µm. Eine solche Dicke erlaubt verschiedene kommerzielle Anwendungen, insbesondere in einem Fabry-Perot Resonator.

Gemäß der Erfindung wird zur Lösung der oben genannten Aufgabe eine Heizelektrode zur Veränderung der Resonanzeigenschaften eines Fabry-Perot Resonators vorgeschlagen. Dabei ermöglicht die Heizelektrode über eine ortsabhängige Schichtdicke der Heizelektrode und/oder über eine Mehrzahl von Elektrodenstreifen der Heizelektrode mit zumindest teilweise verschiedenen anliegenden Stromstärken ein im Wesentlichen räumlich homogenes Aufheizen eines daran direkt oder indirekt angeordneten optischen Abstandshalters, insbesondere des optischen Abstandshalters gemäß mindestens einer Ausführungsform gemäß dem zweiten Aspekt der Erfindung.

Unter einer Heizelektrode ist im Rahmen dieser Anmeldung eine Vorrichtung zum Aufheizen durch mindestens eine Elektrode zu verstehen. Insofern kann die Heizelektrode auch mehrere Elektroden umfassen, die Teile der Heizelektrode bilden.

Über die Heizelektrode gemäß dem weiteren Aspekt der Erfindung kann vorteilhaft ein besonders präzises und homogenes Aufheizen des optischen Abstandshalters ermöglicht werden. Hierdurch kann in Kombination mit der besonders präzisen Homogenität der Schichtdicke des optischen Abstandshalters gemäß dem zweiten Aspekt der Erfindung eine besonders präzise Einstellbarkeit der optischen Eigenschaften des Fabry-Perot Resonators über die Heizelektrode ermöglicht werden.

Die Verwendung von der Mehrzahl von Elektrodenstreifen beruht auf der Erkenntnis, dass Randbereiche der Resonatorstruktur konvektionsbedingt stärker als ein zentraler Bereich der Resonatorstruktur durch eine flächig anliegende Heizelektrode erwärmt werden müssen. Durch mehrere Elektrodenstreifen kann daher ein Heizprofil bereitgestellt werden, welches ein im Wesentlichen homogenes Aufheizen der Resonatorstruktur erlaubt.

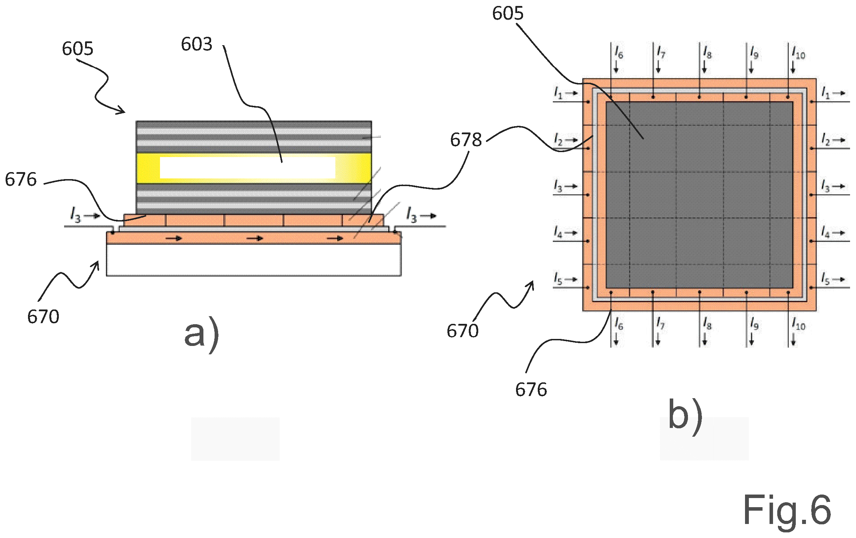

Vorzugsweise sind die Elektrodenstreifen separat ansteuerbar, insbesondere ist eine an einem jeweiligen Elektrodenstreifen anliegende Stromstärke separat elektrisch ansteuerbar, um das homogene Aufheizen zu gewährleisten. Ein möglicher Aufbau einer solchen Heizelektrode ergibt sich aus der Figurenbeschreibung im Rahmen der Figuren 6a und 6b.

Besonders bevorzugt wird an Elektrodenstreifen im Randbereich der Heizelektrode eine größere Stromstärke angelegt als in einem zentralen Bereich der Heizelektrode. Hierdurch kann ein für das homogene Aufheizen des optischen Abstandshalters vorteilhaftes Heizprofil bereitgestellt werden.

In einer Ausführungsform sind die Elektrodenstreifen zumindest teilweise miteinander verflochten.

Gemäß einem dritten Aspekt der Erfindung wird zur Lösung der oben genannten Aufgabe eine Verwendung des homogenisierten optischen Abstandshalters in einem Fabry-Perot Resonator vorgeschlagen.

Erfindungsgemäß können die Resonanzeigenschaften des Fabry-Perot Resonators mit dem homogenisierten optischen Abstandshalter über eine Heizelektrode ortsunabhängig durch ein homogenes Aufheizen des homogenisierten optischen Abstandshalters eingestellt werden.

Die Verwendung gemäß dem dritten Aspekt der Erfindung ist besonders vorteilhaft, da durch das Verfahren zum Behandeln des optischen Abstandshalters ein besonders hoher Grad von Homogenität der optischen Dicke des optischen Abstandshalters besonders schnell erreicht werden kann. Daher kann besonders gut durch das ortunabhängige Aufheizen über die Heizelektrode eine Resonanzwellenlänge präzise und ortsunabhängig für den Fabry-Perot Resonator eingestellt werden.

In einer bevorzugten Ausführungsform der Verwendung gemäß dem dritten Aspekt der Erfindung wird der Fabry-Perot Resonator in Kombination mit einem optischen Bandpassfilter verwendet, wobei eine Bandbreite des optischen Bandpassfilters kleiner als ein freier Spektralbereich des Fabry-Perot Resonators ist, um zusammen mit dem Fabry-Perot Resonator einen einstellbaren optischen Filter mit einer Bandbreite von weniger als 150 pm, insbesondere von weniger als 100 pm, zu bilden. Eine derart geringe Bandbreite wird vorteilhaft durch das erfindungsgemäße Verfahren gemäß dem ersten Aspekt der Erfindung ermöglicht. Mit einer derart geringen Bandbreite sind vorteilhaft verschiedene kommerzielle Anwendungen möglich.

Gemäß einem vierten Aspekt der Erfindung wird zur Lösung der oben genannten Aufgabe eine Verwendung des homogenisierten optischen Abstandshalters in einer spektralen Kamera, insbesondere in einer Hyperspektralkamera, vorgeschlagen. Erfindungsgemäß weist die spektrale Kamera dabei einen Fabry-Perot Resonator auf, dessen Resonanzeigenschaften über eine Heizelektrode ortsunabhängig durch ein homogenes Aufheizen des homogenisierten optischen Abstandshalters eingestellt werden können. In dieser Verwendung wird vorzugsweise eine Kombination aus Fabry-Perot Resonator und optischem Bandpassfilter als einstellbarer optischer Filter vor einem Bildgeber angeordnet. Dies ermöglicht eine bildgebende Spektrographie mit besonders hoher spektraler Auflösung.

Vor diesem Hintergrund betrifft die Erfindung auch eine spektrale Kamera mit einem Fabry-Perot Resonator, der zusammen mit einem optischen Bandpassfilter einen einstellbaren optischen Filter bildet, der vor einer Bildgeber-Einheit der spektralen Kamera angeordnet ist, wobei eine Bandbreite des optischen Bandpassfilters kleiner als ein freier Spektralbereich des Fabry-Perot Resonators ist. Hierbei kann die Resonanzwellenlänge des Fabry-Perot Resonators und mithin der optische Filter durch eine Veränderung einer Eigenschaft des optischen Abstandshalters des Fabry-Perot Resonators angepasst werden. Dabei besteht der optische Abstandshalter erfindungsgemäß aus einem Photopolymer. Vorzugsweise wird hierbei eine Temperatur des optischen Abstandshalters durch ein homogenes Aufheizen erhöht, wodurch sich die Resonanzwellenlänge mit steigender Temperatur hin zu einer größeren Resonanzwellenlänge verschiebt. Das homogene Aufheizen erfolgt vorzugweise durch eine Heizelektrode, die an dem Fabry-Perot Resonator und/oder an dem optischen Abstandshalter anliegt. Alternativ oder ergänzend zu diesem Beispiel wird eine Dicke des optischen Abstandshalters durch eine Streckung oder Stauchung mittels piezoelektrischen Aktuatoren verändert. Hierfür wird eine Spannung an einem oder mehreren piezoelektrischen Aktuatoren angelegt, um den Abstand der dichroitischen Spiegel zu verändern. Mit größerer Spannung verschiebt sich die Resonanzwellenlänge typischerweise hin zu größeren Wellenlängen.

Eine ähnliche Kombination aus Fabry-Perot Resonator mit optischem Abstandshalter und Heizelektrode ist auch im Bereich der kamerabasierten photoakustischen Bildgebung nutzbar. Eine solche Verwendung ist ebenfalls als ein Aspekt durch diese Erfindung, insbesondere im Rahmen des dritten Aspekts dieser Erfindung, umfasst. Dabei wird über die Heizelektrode die Resonanzwellenlänge derart verschoben, dass der Punkt der größten Reflektionsänderung in der Resonator-Transferfunktion sich bei der Wellenlänge eines den Fabry-Perot Resonators bestrahlenden Lasers befindet. Hierdurch wird ein entsprechender Messaufbau besonders sensitiv gegenüber Verformungen des homogenisierten optischen Abstandshalters durch akustische Wellen. Details der Umsetzung einer solchen kamerabasierten photoakustischen Bildgebung sind dem Fachmann bekannt und werden daher im Folgenden nicht im Detail beschrieben.

Gemäß einem fünften Aspekt der Erfindung wird ein Computerprogramm mit einem Programmcode zur Durchführung von Verfahrensschritten gemäß dem ersten Aspekt der Erfindung vorgeschlagen. Dabei wird der Programmcode auf einem Computer, einem Prozessor oder einer programmierbaren Hardwarekomponente ausgeführt. Die Verfahrensschritte umfassen dabei zumindest die folgenden Schritte des Verfahrens gemäß dem ersten Aspekt der Erfindung:
- räumlich aufgelöstes Detektieren eines reflektierten oder transmittierten Anteils eines auf einen Fabry-Perot Resonator ausgerichteten Prüfstrahls, wobei der reflektierte oder transmittierte Anteil ortsabhängige Resonanzwellenlängen des Fabry-Perot Resonators indiziert;
- räumlich aufgelöstes Anpassen einer ortsabhängigen Bestrahlungsstärke eines räumlich modulierten Behandlungsstrahls basierend auf dem detektierten reflektierten oder transmittierten Anteil derart, dass durch eine verursachte Brechungsindexänderung eine Varianz von indizierten ortabhängigen Resonanzwellenlängen des Fabry-Perot Resonators reduziert wird.

Vorzugsweise werden mehrere Schritte des erfindungsgemäßen Verfahrens durch einen gemeinsamen Computer, einen gemeinsamen Prozessor oder eine gemeinsame programmierbare Hardwarekomponente ausgeführt. Vorzugsweise sind die einzelnen Schritte dabei zumindest auf Software-Ebene voneinander durch entsprechende Softwareblöcke getrennt. Besonders bevorzugt werden alle Schritte des erfindungsgemäßen Verfahrens auf einem gemeinsamen Computer, einem gemeinsamen Prozessor oder einer gemeinsamen programmierbaren Hardwarekomponente ausgeführt.

Die Erfindung soll nun anhand von in den Figuren schematisch dargestellten, vorteilhaften Ausführungsbeispielen näher erläutert werden. Von diesen zeigen im Einzelnen:
- Fig. 1: zeigt ein Flussdiagramm eines Ausführungsbeispiels eines Verfahrens gemäß einem ersten Aspekt der Erfindung;
- Fig. 2: zeigt ein System zur Durchführung des Verfahrens gemäß dem ersten Aspekt der Erfindung;
- Fig. 3: zeigt eine schematische Darstellung eines Ausführungsbeispiels einer Verwendung eines homogenisierten optischen Abstandshalters gemäß einem dritten Aspekt der Erfindung in einem Fabry-Perot Resonator;
- Fig. 4: zeigt ein Diagramm mit einem Transmissionsspektrum eines Fabry-Perot Resonators mit einem homogenisierten optischen Abstandshalter gemäß einem zweiten Aspekt der Erfindung.
- Fig. 5: zeigt eine schematische Darstellung eines Ausführungsbeispiels einer Verwendung eines homogenisierten optischen Abstandshalters gemäß einem vierten Aspekt der Erfindung in einer spektralen Kamera; und
- Figs. 6 a, b: zeigen eine schematische Darstellung eines Ausführungsbeispiels einer Heizelektrode gemäß einem weiteren Aspekt der Erfindung in einer Seitenansicht (Fig. 6 a) und einer Draufsicht (Fig. 6 b).

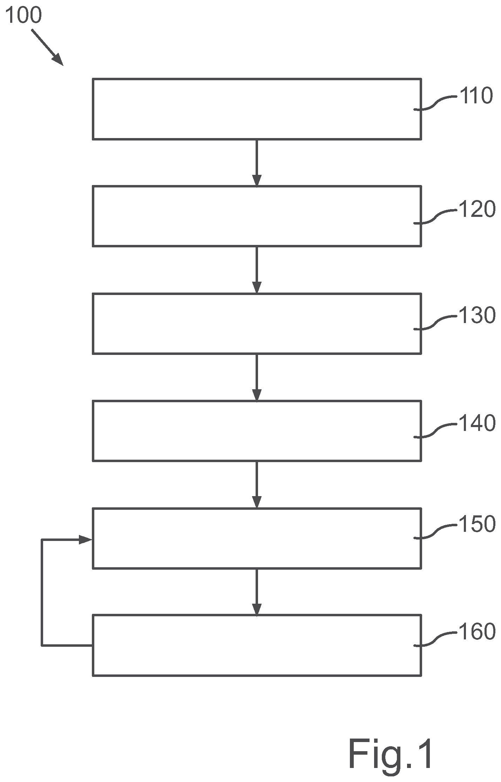

Fig. 1 zeigt ein Flussdiagramm eines Ausführungsbeispiels eines Verfahrens 100 gemäß einem ersten Aspekt der Erfindung.

Das Verfahren 100 ist ausgebildet zur Behandlung eines optischen Abstandshalters für einen Fabry-Perot Resonator. Dabei weist das Verfahren die im Folgenden erläuterten Schritte auf.

Ein erster Schritt 110 umfasst ein Anordnen des optischen Abstandshalters, welcher zumindest teilweise aus einem Photopolymer besteht, in einem Fabry-Perot Resonator, so dass der Fabry-Perot Resonator zwei durch den optischen Abstandshalter voneinander getrennte dichroitische Spiegel umfasst.

Ein nächster Schritt 120 umfasst ein Anordnen des Fabry-Perot Resonators in einem optischen System.

Ein darauffolgender Schritt 130 umfasst ein Ausrichten eines räumlich modulierten Behandlungsstrahls auf den Fabry-Perot Resonator, wobei der räumlich modulierte Behandlungsstrahl Licht aus einem kurzwelligen Bereich aufweist, wobei das Licht aus dem kurzwelligen Bereich geeignet ist, eine Brechungsindexänderung des optischen Abstandshalters zu verursachen.

Ein weiterer Schritt 140 umfasst ein Ausrichten eines Prüfstrahls, insbesondere eines optisch aufgeweiteten Prüfstrahls, auf den Fabry-Perot Resonator.

Ein nächster Schritt 150 umfasst ein räumlich aufgelöstes Detektieren eines reflektierten oder transmittierten Anteils des auf den Fabry-Perot Resonator ausgerichteten Prüfstrahls, wobei der reflektierte oder transmittierte Anteil ortsabhängige Resonanzwellenlängen des Fabry-Perot Resonators indiziert.

Ein abschließender Schritt 160 umfasst ein räumlich aufgelöstes Anpassen einer ortsabhängigen Bestrahlungsstärke des räumlich modulierten Behandlungsstrahls basierend auf dem detektierten reflektierten oder transmittierten Anteil derart, dass durch die verursachte Brechungsindexänderung eine Varianz von indizierten ortabhängigen Resonanzwellenlängen des Fabry-Perot Resonators reduziert wird.

Die Schritte 130 und 140 können in einer beliebigen Reihenfolge ausgeführt werden. Alle weiteren Schritte des Verfahrens 100 werden vorzugsweise in der angegebenen Reihenfolge ausgeführt.

Vorzugsweise wird das Detektieren gemäß Schritt 150 wiederholt ausgeführt, insbesondere in regelmäßigen zeitlichen Abständen ausgeführt. Besonders bevorzugt wird nach dem Anpassen der Bestrahlungsstärke gemäß Schritt 160 wieder der reflektierte oder transmittierte Anteil gemäß Schritt 150 detektiert, um abhängig davon wieder die ortsabhängige Bestrahlungsstärke anzupassen.

Besonders bevorzugt wird ein Wechsel zwischen den Schritten 150 und 160 so oft wiederholt, bis ein vorbestimmter Schwellenwert für die Varianz von indizierten ortabhängigen Resonanzwellenlängen des Fabry-Perot Resonators zumindest in einem relevanten Behandlungsbereich des optischen Abstandshalters erreicht wird. Dies bedeutet, dass das Verfahren 100 vorzugsweise erst beendet wird, wenn die ortsabhängigen Resonanzwellenlängen zumindest im relevanten Bereich des optischen Abstandshalters, also beispielsweise nahe an der zu verwendenden optischen Achse eine geringe Varianz haben. In diesem Sinne ist es das Ziel des erfindungsgemäßen Verfahrens 100, die optische Dicke des optischen Abstandshalters zu homogenisieren. Typische Herstellungsschwankungen der optischen Dicke sind derart groß, dass für im Folgenden erläuterte Anwendungen des optischen Abstandshalters eine homogenere optische Dicke sicherzustellen ist, was durch das Verfahren 100 besonders vorteilhaft ermöglicht wird.

So werden in einer Variante des dargestellten Ausführungsbeispiels die beiden Schritte 150 und 160 automatisiert ausgeführt, beispielsweise basierend auf einem Computerprogramm mit einem Programmcode zur Durchführung von den Schritten 150 und 160. Eine derartige automatisierte Ausführung erlaubt eine besonders kurze Behandlungsdauer des optischen Abstandshalters.

Die Anpassung der ortsabhängigen Bestrahlungsstärke kann dabei auf verschiedene Arten durchgeführt werden. Für eine Homogenisierung ist eine Referenzresonanzwellenlänge erforderlich. Diese Referenzresonanzwellenlänge kann eine vorbestimmte Wellenlänge sein oder es kann eine im Verfahren bestimmte Resonanzwellenlänge als Referenzresonanzwellenlänge verwendet werden. In einer bevorzugten Variante wird eine kleinste indizierte Resonanzwellenlänge des Fabry-Perot Resonators bestimmt und die ortsabhängige Bestrahlungsstärke derart gewählt, dass eine durch den räumlich modulierten Behandlungsstrahl verursachte Brechungsindexänderung eine Reduzierung der jeweiligen ortsabhängigen Resonanzwellenlänge im Wesentlichen hin zu der kleinsten indizierten Resonanzwellenlänge verursacht.

Hierdurch kann besonders schnell, also nach wenigen Iterationen der Schritte 150 und 160, ein ausreichend homogenisierter optischer Abstandshalter bereitgestellt werden.

Grundsätzlich kann neben der Bestrahlungsstärke erfindungsgemäß auch eine Bestrahlungsdauer des räumlich modulierten Behandlungsstrahls basierend auf dem detektierten reflektierten oder transmittierten Anteil angepasst werden. Hierdurch können beispielsweise besonders hohe Bestrahlungsstärken vermieden werden.

Fig. 2 zeigt ein System 200 zur Durchführung des Verfahrens gemäß dem ersten Aspekt der Erfindung.

Der Aufbau dieses Systems 200 ist beispielhaft. Wie für den Fachmann auf dem Gebiet der Optik leicht ersichtlich ist, kann das erfindungsgemäße Verfahren auch durch Aufbauten, die sich deutlich von dem in Fig. 2 gezeigten Aufbau unterscheiden ausgeführt werden.

Das System 200 umfasst einen Fabry-Perot Resonator 205 mit dem optischen Abstandshalter 203, der Laserlicht eines Prüflasers 210 teilweise reflektiert. Das Laserlicht bildet den Prüfstrahl 212 im Sinne der vorliegenden Erfindung und ist als gestrichelter Pfeil innerhalb des optischen Systems 200 dargestellt. Der Prüfstrahl 212 passiert nach dem Verlassen des Prüflasers 210 einen Polarisator 214 und einen Strahlaufweiter 216. Vor dem Fabry-Perot Resonator 205 wird der Prüfstrahl 212 durch einen dichroitischen Spiegel 218 in Richtung der optischen Achse des Fabry-Perot Resonators 205 ausgerichtet und passiert ein Lambda/4-Plättchen 220. Der Anteil des daraufhin reflektierten Lichts des Prüfstrahls 212 wird über den dichroitischen Spiegel 218 und einen polarisierenden Strahlteiler 222 zu einer Kamera 224 geführt, die ein entsprechendes Detektionssignal 226 an einen Computer 228 sendet. Der Computer 228 bildet hierbei eine zentrale Steuereinheit des Systems 200.

Der Behandlungsstrahl 232 wird von einem Behandlungslaser 230 bereitgestellt und ist als durchgezogener Pfeil innerhalb des optischen Systems dargestellt. Hierbei passiert der Behandlungsstrahl 232 nach dem Verlassen des Behandlungslasers 230 wiederum einen Polarisator 234 und einen Strahlaufweiter 236. Der aufgeweitete Behandlungsstrahl 232 wird nun über einen Lichtmodulator 240 zur räumlichen Lichtmodulation in seiner ortabhängigen Bestrahlungsstärke moduliert. Hierfür ist der Lichtmodulator 240 mit dem Computer 228 signaltechnisch verbunden. Dadurch kann der Computer 228 beim Steuern der ortsabhängigen Bestrahlungsstärke den reflektrierten Anteil des Prüfstrahls 212 und dadurch vor allem die Verteilung der ortsabhängigen Resonanzwellenlängen des Fabry-Perot Resonators 205 berücksichtigen. Der Behandlungsstrahl 232 besteht vorzugsweise aus Licht mit einer Wellenlänge von weniger als 450 nm, insbesondere von weniger als 420 nm. Derartiges Licht, insbesondere ultraviolettes Licht, ist besonders geeignet, die optische Dicke des optischen Abstandshalters, bei dem es sich erfindungsgemäß um ein Photopolymer handelt, zu verändern.

Nach dem räumlichen Modulieren durch den Lichtmodulator 240 passiert der modulierte Behandlungsstrahl 232 wiederum einen Polarisator 242 und zwei polarisierende Strahlteiler 244, 246, eher der gleiche dichroitische Spiegel 218 wie bereits beim Strahlengang des Prüfstrahls 212 passiert wird, um nach dem Lambda/4-Plättchen 220 auf den Fabry-Perot Resonator 205 mit dem optischen Abstandshalter 203 zu treffen.

Durch den dichroitischen Spiegel 218 wird mithin ein gleichzeitiges Bestrahlen des optischen Abstandshalters 203 durch den Prüfstrahl 212 und den Behandlungsstrahl 232 ermöglicht. Interferenzen zwischen beiden Strahlen können durch die entsprechend bereitgestellten Polarisationen vermieden werden. Der von dem Fabry-Perot Resonator reflektierte Anteil des Behandlungsstrahls 232 wird über das System aus polarisierenden Strahlteilern und einem Absorber 248 aus dem optischen System entfernt, damit der optische Abstandshalter 203 tatsächlich nur durch den aktuell modulierten Behandlungsstrahl 232 behandelt wird. Hierdurch kann die Genauigkeit der zu erzielenden Homogenität des optischen Abstandshalters erhöht werden, also die Varianz von ortsabhängigen Resonanzwellenlängen des Fabry-Perot Resonators reduziert werden.

Die beiden Laser 210, 230 müssen während der Ausführung des erfindungsgemäßen Verfahrens nicht in ihrer Ausrichtung oder in dem bereitgestellten Laserlicht verändert werden. Die erfindungsgemäße Veränderung bei der Behandlung des optischen Abstandshalters 203 findet lediglich über den Lichtmodulator 240 statt.

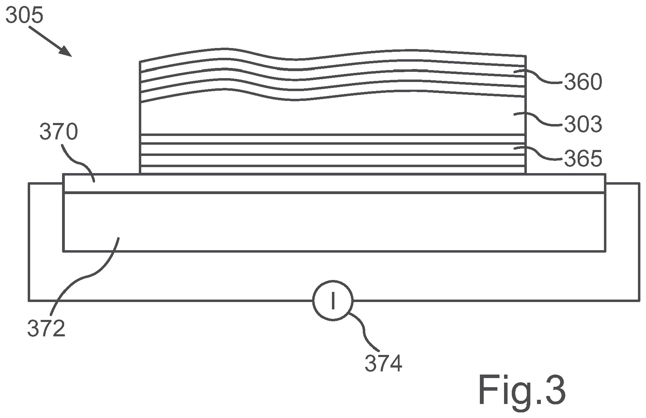

Fig. 3 zeigt eine schematische Darstellung eines Ausführungsbeispiels einer Verwendung eines homogenisierten optischen Abstandshalters 303 gemäß einem dritten Aspekt der Erfindung in einem Fabry-Perot Resonator 305.

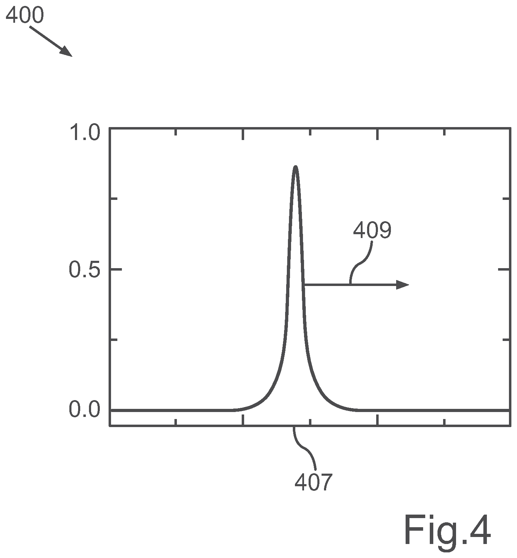

Der optische Abstandshalter 303 liegt hierbei direkt an den zwei dichroitischen Spiegeln 360, 365 des Fabry-Perot Resonators 305 an. Der optische Abstandshalter ist entsprechend dem Verfahren gemäß dem ersten Aspekt der Erfindung behandelt und verfügt daher über eine homogenisierte optische Dicke. Die tatsächliche geometrische Dicke ist, wie in Fig. 3 ersichtlich, möglicherweise nicht exakt homogen, was für die optische Dicke jedoch unerheblich ist. Zur Veränderung der Resonanzwellenlänge ist bei dieser Verwendung des optischen Abstandshalters eine Heizelektrode 370 an dem Fabry-Perot Resonator angeordnet, über die der optische Abstandshalter 303 homogen aufgeheizt werden kann. Die hierdurch verursachte Veränderung des Transmissionsspektrums des Fabry-Perot Resonators 305 ist in Fig. 4 beschrieben.

Zum Betreiben der Heizelektrode 370 ist diese auf einem Trägermaterial 372 angeordnet und mit einer einstellbaren Stromquelle 374 verbunden.

Das erfindungsgemäße Verfahren ermöglicht vorteilhaft besonders große Ausmaße des homogenisierten optischen Abstandshalters 303. So sorgt das Verfahren für eine besonders schnelle Homogenisierung, so dass auch in kommerziell sinnvollen Zeitspannen, beispielsweise in weniger als 20 Stunden, insbesondere in weniger als 5 Stunden, eine Homogenisierung des Abstandshalters 303 und mithin eine schmale Bandbreite des Fabry-Perot Resonators verwirklicht werden kann. Hierfür kann der optische Abstandshalter beispielsweise eine Querschnittsfläche senkrecht zur vorgesehenen optischen Achse von mindestens 100 mm², insbesondere von mindestens 200 mm², umfassen. Weiterhin kann der optische Abstandshalter 303 eine Dicke zwischen 1 µm und 50 µm aufweisen. Die Bandbreite des Fabry-Perot Resonators liegt dabei für eine einzelne Resonanzwellenlänge vorzugsweise im Bereich von 100 pm.

Fig. 4 zeigt ein Diagramm mit einem Transmissionsspektrum 400 eines Fabry-Perot Resonators mit einem homogenisierten optischen Abstandshalter gemäß einem zweiten Aspekt der Erfindung.

Das Diagramm hat auf der x-Achse die Wellenlänge in nm aufgetragen und auf der y-Achse die Transmission skaliert von 0 bis 1 aufgetragen, wobei 1 eine ungefilterte Transmission und 0 ein vollständiges Herausfiltern des entsprechenden spektralen Anteils bedeutet.

Es ist im Transmissionsspektrum 400 zu erkennen, dass im dargestellten spektralen Bereich nur ein Licht mit einer sehr schmalen Bandbreite um die Resonanzwellenlänge 407 herum den Fabry-Perot Resonanter mit dem behandelten optischen Abstandshalter passieren kann. Vorzugsweise beträgt die Bandbreite weniger als 150 pm, insbesondere weniger als 100 pm. Hierdurch ist für viele mögliche Anwendungen, wie beispielsweise in der bildgebenden Spektroskopie und/oder in der kamerabasierten photoakustischen Bildgebung, eine besonders hohe spektrale Auflösung möglich.

Schließlich ist in Fig. 4 auch ein Pfeil 409 dargestellt, der die Verschiebung des dargestellten Spektrums bei wachsender Temperatur des optischen Abstandshalters darstellt. Dies stellt die Grundlage dafür dar, dass über eine Heizelektrode und ein entsprechendes homogenes Aufheizen des optischen Abstandshalters die spektralen Eigenschaften des über den optischen Abstandshalter realisierten optischen Filter besonders kontrolliert und reproduzierbar verstellt werden können.

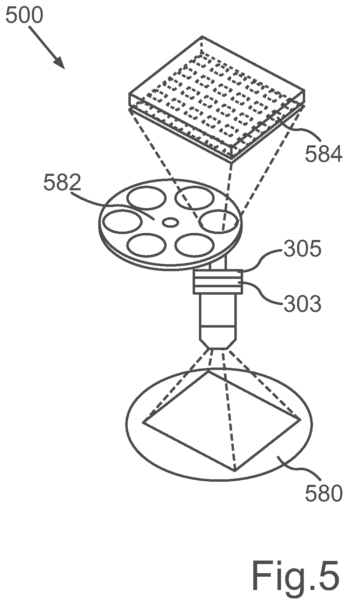

Fig. 5 zeigt eine schematische Darstellung eines Ausführungsbeispiels einer Verwendung eines homogenisierten optischen Abstandshalters 303 gemäß einem vierten Aspekt der Erfindung in einer spektralen Kamera 500, insbesondere in einer Hyperspektralkamera.

In diesem Ausführungsbeispiel werden Wellenlängen in einem hyperspektralen Datensatz 580 erfasst, wobei die Strahlen durch ein mit dem Fabry-Perot Resonator 305 gemäß dem dritten Aspekt der Erfindung kombiniertes Filterrad 582 spektral gefiltert werden. Das Filterrad 582 bildet einen einstellbaren optischen Bandpassfilter und ist dabei so gewählt, dass die jeweilige Bandbreite einer Filterradeinstellung des Filterrades 582 kleiner ist als der freie Spektralbereich des Fabry-Perot Resonators 305. Hierdurch bildet die Kombination aus Fabry-Perot Resonator 305 und Filterrad 582 einen optischen Filter mit genau einer Resonanzwellenlänge. Diese Resonanzwellenlänge wird, wie weiter oben erläutert, aufgrund der Behandlung des optischen Abstandshalter 303 gemäß dem Verfahren gemäß dem ersten Aspekt der Erfindung, mit einer besonders geringen Bandbreite von weniger als 150 pm, vorzugsweise von weniger als 100 pm, erreicht.

Die Strahlen mit einer derart geringen Bandbreite erreichen daraufhin einen Bildgeber 584 der spektralen Kamera 500. Daher ist durch eine derartige Verwendung des homogenisierten optischen Abstandshalter 303 eine besonders hohe spektrale Auflösung der entsprechend bereitgestellten spektrale Kamera möglich.

Neben der beschriebenen Anwendung in der bildgebenden Spektroskopie kann der Fabry-Perot Resonator entsprechend dem dritten Aspekt der Erfindung auch im Rahmen einer kamerabasierten photoakustischen Bildgebung verwendet werden. Hierfür wird bekanntermaßen ein anderer Messaufbau verwendet. So kann beispielsweise der Fabry-Perot Resonator großflächig mit einem Laser bestrahlt werden und die Resonanzwellenlänge wird mittels Heizelektrode derart verschoben, dass der Punkt der größten Reflektionsänderung in der Resonator-Transferfunktion sich bei der Wellenlänge des Lasers befindet. Hierdurch führen Verformungen des homogenisierten optischen Abstandshalters durch akustische Wellen zu besonders großen Änderungen von durch den Fabry-Perot Resonator reflektiertem Laserlicht. Diese Änderung kann beispielsweise durch eine Kamera gemessen werden.

Die Figuren 6 a, b zeigen eine schematische Darstellung eines Ausführungsbeispiels einer Heizelektrode 670 gemäß einem weiteren Aspekt der Erfindung in einer Seitenansicht (Fig. 6 a) und einer Draufsicht (Fig. 6 b). Die dargestellte Heizelektrode 670 verfügt über eine Vielzahl von zumindest teilweise verschieden bestromten Elektrodenstreifen 676. Zudem können die Elektrodenstreifen 676 jeweils separat angesteuert werden, was auch durch die teilweise verschiedenen dargestellten Ströme I1 bis I10 an den elektrischen Kontakten dargestellt ist.

Der jeweils dargestellte Fabry-Perot Resonator 605 entspricht im Wesentlichen den Fabry-Perot Resonatoren aus den vorhergehenden Ausführungsbeispielen. Insbesondere ist der Fabry-Perot Resonator 605 vorzugsweise mit einem optischen Abstandshalter 603 gemäß dem zweiten Aspekt der Erfindung ausgestattet, damit ein homogenes Aufheizen des Abstandshalters 603 auch zu einer im Wesentlichen homogenen Veränderung der optischen Eigenschaften, also insbesondere der Resonanzwellenlänge des Fabry-Perot Resonators 605 führt.

Vorzugsweise werden Elektrodenstreifen 676, die eine vergleichbare Lage relativ zu dem optischen Abstandshalter 603 aufweisen mit einem im Wesentlichen gleichen Strom betrieben. So werden beispielsweise die Elektrodenstreifen 676 bei den vier Ecken des quadratischen optischen Abstandshalters 603 im Wesentlichen mit der gleichen Stromstärke aufgeheizt.

In dem dargestellten Ausführungsbeispiel sind die Elektrodenstreifen 676 separat ansteuerbar, um das homogene Aufheizen zu gewährleisten. Hierdurch kann beispielsweise abhängig von einer angestrebten Dicke des optischen Abstandshalters 603 eine jeweils angelegte Stromstärke abhängig von dem Ort des jeweiligen Elektrodenstreifens 676 verändert werden. Beispielsweise können Elektrodenstreifen 676 im Randbereich der Heizelektrode 670 stärker aufgeheizt werden als Elektrodenstreifen 676 im zentralen Bereich der Heizelektrode 670. Hierdurch kann berücksichtigt werden, dass die Randbereiche konvektionsbedingt kühler bleiben als ein zentraler Bereich der Heizelektrode 670. Würden alle Bereiche der Heizelektrode ortsunabhängig die gleiche Temperatur haben, wäre mithin ein inhomogenes Aufwärmen der Resonatorstruktur die Folge.

Ein Isolator 678 zwischen Elektroden der Heizelektrode ist in dem vorliegenden Ausführungsbeispiel durch SiO2 gebildet.

### Bezugszeichenliste

- 100: Verfahren
- 110, 120, 130, 140, 150, 160: Schritte des Verfahrens
- 200: System
- 203, 303, 603: optischer Abstandshalter
- 205, 305, 605: Fabry-Perot Resonator
- 210: Prüflaser
- 212: Prüfstrahl
- 214, 234, 242: Polarisator
- 216, 236: Strahlaufweiter
- 218, 360, 365: dichroitischer Spiegel
- 220: Lambda/4-Plättchen
- 222, 244, 246: polarisierender Strahlteiler
- 224: Kamera
- 226: Detektionssignal
- 228: Computer
- 230: Behandlungslaser
- 232: Behandlungsstrahl
- 240: Strahlmodulator zur räumlichen Strahlmodulation
- 248: Absorber
- 370, 670: Heizelektrode
- 372: Trägermaterial
- 374: Stromquelle
- 400: Transmissionsspektrum
- 407: Resonanzwellenlänge
- 409: Pfeil
- 500: spektrale Kamera
- 580: hyperspektraler Datensatz
- 582: Filterrad bildet optischen Bandpassfilter
- 584: Bildgeber
- 676: Elektrodenstreifen
- 678: Isolator
- I1 bis I10: Stromstärke

Eine erste spezielle Ausführungsform der Erfindung sieht vor, ein Verfahren (100) zur Behandlung eines optischen Abstandshalters (203) für einen Fabry-Perot Resonator (205), aufweisend die Schritte:
- Anordnen des optischen Abstandshalters (203), welcher zumindest teilweise aus einem Photopolymer besteht, in einem Fabry-Perot Resonator (205), so dass der Fabry-Perot Resonator (205) zwei durch den optischen Abstandshalter (203) voneinander getrennte dichroitische Spiegel (360, 365) umfasst;
- Anordnen des Fabry-Perot Resonators (205) in einem optischen System (200);
- Ausrichten eines räumlich modulierten Behandlungsstrahls (232) auf den Fabry-Perot Resonator (205), wobei der räumlich modulierte Behandlungsstrahl (232) Licht aus einem kurzwelligen Bereich aufweist, wobei das Licht aus dem kurzwelligen Bereich geeignet ist, eine Brechungsindexänderung des optischen Abstandshalters (203) zu verursachen;
- Ausrichten eines Prüfstrahls (212), insbesondere eines optisch aufgeweiteten Prüfstrahls, auf den Fabry-Perot Resonator (205);
- räumlich aufgelöstes Detektieren eines reflektierten oder transmittierten Anteils des auf den Fabry-Perot Resonator (205) ausgerichteten Prüfstrahls (212), wobei der reflektierte oder transmittierte Anteil ortsabhängige Resonanzwellenlängen des Fabry-Perot Resonators (205) indiziert; und
- räumlich aufgelöstes Anpassen einer ortsabhängigen Bestrahlungsstärke des räumlich modulierten Behandlungsstrahls (232) basierend auf dem detektierten reflektierten oder transmittierten Anteil derart, dass durch die verursachte Brechungsindexänderung eine Varianz von indizierten ortsabhängigen Resonanzwellenlängen des Fabry-Perot Resonators (205) reduziert wird.

Weiterhin ein Verfahren (100) nach einem zweiten Aspekt, ausgeführt gemäß der ersten speziellen Ausführungsform der Erfindung, wobei für das Anpassen der ortsabhängigen Bestrahlungsstärke eine kleinste indizierte Resonanzwellenlänge des Fabry-Perot Resonators (205) bestimmt wird und die ortsabhängige Bestrahlungsstärke derart gewählt wird, dass eine durch den räumlich modulierten Behandlungsstrahl (232) verursachte Brechungsindexänderung eine Reduzierung der jeweiligen ortsabhängigen Resonanzwellenlänge im Wesentlichen hin zu der kleinsten indizierten Resonanzwellenlänge verursacht.

Weiterhin ein Verfahren (100) nach einem dritten Aspekt, ausgeführt gemäß einer der zuvor beschriebenen speziellen Ausführungsformen, wobei der Behandlungsstrahl (232) Licht mit einer Wellenlänge von weniger als 450 nm, insbesondere von weniger als 420 nm aufweist.

Weiterhin ein Verfahren (100) nach einem vierten Aspekt, ausgeführt gemäß einer der zuvor beschriebenen speziellen Ausführungsformen, weiterhin aufweisend ein Anpassen einer Bestrahlungsdauer des räumlich modulierten Behandlungsstrahls (232) basierend auf dem detektierten reflektierten oder transmittierten Anteil.

Weiterhin ein Verfahren (100) nach einem fünften Aspekt, ausgeführt gemäß einer der zuvor beschriebenen speziellen Ausführungsformen Verfahren (100), wobei der Fabry-Perot Resonator (205) gleichzeitig von dem Prüfstrahl (212) und dem Behandlungsstrahl (232) bestrahlt wird.

Weiterhin ein Verfahren (100) nach einem sechsten Aspekt, ausgeführt gemäß der Ausführungsform nach dem fünften Aspekt, wobei die gleichzeitige Bestrahlung durch den Behandlungsstrahl (232) und den Prüfstrahl (212) über ein Einbringen eines dichroitischen Spiegels (218) in das optische System (200) ermöglicht wird.

Weiterhin ein Verfahren (100) nach einem siebten Aspekt, ausgeführt gemäß einer der zuvor beschriebenen speziellen Ausführungsformen, wobei das räumlich aufgelöste Detektieren des reflektierten oder transmittierten Anteils und das räumlich aufgelöste Anpassen der ortsabhängigen Bestrahlungsstärke automatisiert erfolgen.

Weiterhin ein Verfahren (100) nach einem achten Aspekt, ausgeführt gemäß einer der zuvor beschriebenen speziellen Ausführungsformen, wobei das räumlich aufgelöste Detektieren des reflektierten oder transmittierten Anteils und das darauf basierende räumlich aufgelöste Anpassen der ortsabhängigen Bestrahlungsstärke so oft wiederholt werden, bis ein vorbestimmter Schwellenwert für die Varianz von indizierten ortabhängigen Resonanzwellenlängen des Fabry-Perot Resonators (205) zumindest in einem relevanten Behandlungsbereich des optischen Abstandshalters (203) erreicht wird.

Ferner betrifft eine weitere spezielle Ausgestaltung der Erfindung einen homogenisierten optischen Abstandshalter (203), der durch ein Verfahren (100) gemäß einer der zuvor beschriebenen speziellen Ausführungsformen behandelt wurde.

Vorzugsweise ist der zuvor beschriebene homogenisierte optische Abstandshalter (203) derart weitergebildet, dass eine Querschnittsfläche des homogenisierten optischen Abstandshalters (203) senkrecht zur vorgesehenen optischen Achse mindestens 100 mm², insbesondere mindestens 200 mm², umfasst.

Weiterhin ist es denkbar, dass der zuvor beschriebene homogenisierte optische Abstandshalter (203) dadurch weitergebildet ist, dass er eine Dicke zwischen 1 µm und 50 µm aufweist.

## Patentansprüche

1. Heizelektrode, die an einem zwei dichroitische Spiegel (360, 365) voneinander trennenden, zumindest teilweise aus einem Photopolymer bestehenden Abstandshalter eines Fabry-Perot-Resonators angeordnet ist und derart ausgestaltet ist, dass über eine ortsabhängige Schichtdicke der Heizelektrode und/oder über eine Mehrzahl von Elektrodenstreifen der Heizelektrode, an denen zumindest teilweise verschiedene Stromstärken anliegen, ein im Wesentlichen räumlich homogenes Aufheizen des daran angeordneten optischen Abstandshalters ermöglicht wird.

2. Fabry-Perot-Resonator mit einem optischen Abstandshalter (203), durch den zwei dichroitische Spiegel (360, 365) voneinander getrennt sind und mit einer Heizelektrode zur Veränderung der Resonanzeigenschaften des Fabry-Perot Resonators, wobei die Heizelektrode über eine ortsabhängige Schichtdicke der Heizelektrode und/oder über eine Mehrzahl von Elektrodenstreifen der Heizelektrode an denen zumindest teilweise verschiedene Stromstärken anliegen ein im Wesentlichen räumlich homogenes Aufheizen des daran angeordneten optischen Abstandshalters ermöglicht, wobei der Abstandshalter zumindest teilweise aus einem Photopolymer besteht.

3. Fabry-Perot-Resonator gemäß Anspruch 2, wobei die Elektrodenstreifen separat elektrisch ansteuerbar sind, um das homogene Aufheizen zu gewährleisten.

4. Fabry-Perot-Resonator gemäß Anspruch 2 oder 3 in Kombination mit einem optischen Bandpassfilter (582), wobei eine Bandbreite des optischen Bandpassfilters (582) kleiner als ein freier Spektralbereich des Fabry-Perot Resonators (305) ist, um zusammen mit dem Fabry-Perot Resonator (305) einen einstellbaren optischen Filter mit einer Bandbreite von weniger als 150 pm, insbesondere von weniger als 100pm, zu bilden.

5. Spektrale Kamera (500) mit einem Fabry-Perot-Resonator nach einem der Ansprüche 2 bis 4.

6. Verfahren zur ortsunabhängigen Einstellung von Resonanzeigenschaften eines Fabry-Perot-Resonators, bei dem ein zwei dichroitische Spiegel (360, 365) trennender homogenisierter Abstandshalter (303) mit einem daran anliegenden Heizelement zur Veränderung der Resonanzeigenschaften aufgeheizt wird.

7. Verfahren nach Anspruch 6 mit den Schritten:
- räumlich aufgelöstes Detektieren eines reflektierten oder transmittierten Anteils eines auf einen Fabry-Perot Resonator (205) ausgerichteten Prüfstrahls (212), wobei der reflektierte oder transmittierte Anteil ortsabhängige Resonanzwellenlängen des Fabry-Perot Resonators (205) indiziert;
- ein im Wesentlichen räumlich homogenes Aufheizen des optischen Abstandshalters basierend auf dem detektierten reflektierten oder transmittierten Anteil.

8. Computerprogramm mit einem Programmcode zur Durchführung von Verfahrensschritten (150, 160), wenn der Programmcode auf einem Computer, einem Prozessor oder einer programmierbaren Hardwarekomponente ausgeführt wird, zur Umsetzung des Verfahrens nach Anspruch 6 oder 7.
